# EUROPEAN PATENT APPLICATION

(11) **EP 2 290 610 A1**
(43) Date of publication of application: **02.03.2011**
(21) Application number: 10173058.8
(22) Date of filing: 17.08.2010
(51) Int. Cl.: G06Q 50/00

(54) **Methods and systems for monitoring and scheduling operations and maintenance activities**

(30) Priority: 27.08.2009 US 549146
(71) Applicant: GENERAL ELECTRIC COMPANY, Schenectady, NY 12345 (US)
(72) Inventor: Scholte-Wassink, Hartmut, 49828 Lage (DE)
(74) Representative: Bedford, Grant Richard

(57) **Abstract**

A system for monitoring and scheduling operations and maintenance (O&M) activities for a facility is provided. The facility includes a plurality of machines. The system includes a user computer (144), a memory device for storing O&M data and resource availability data for the plurality of machines, and a processor coupled to the memory device, the processor configured to communicate with the user computer via an electronic data communication device (150). The processor is programmed to receive completed O&M activity data corresponding to at least one completed O&M activity via the user computer, determine at least one recommended O&M activity based at least partially on the stored O&M data and the completed O&M activity data, analyze resource availability data, the resource availability data including at least one of technician availability data and material availability data, and schedule the recommended O&M activity based on resource availability data.

## Description

The field of the present disclosure relates generally to the operation of a wind farm and, more specifically, to monitoring and scheduling operations and maintenance activities of wind farms.

Wind turbines utilize wind energy to produce electrical power. Wind turbines typically include a rotor having multiple blades that transform wind energy into rotational motion of a drive shaft, which in turn is utilized to drive a rotor of an electrical generator to produce electrical power. A plurality of wind turbines may be grouped together, sometimes referred to as a "wind farm."

Typically, preventative maintenance is scheduled and monitored by the operator of the wind farm, or by a company under contract to maintain the wind turbines within the wind farm. Ordering of materials or replacement parts may be performed by a different entity. Furthermore, a manufacturer of wind farm components, for example, a manufacturer of a wind turbine generator, may have the most up-to-date component information. The de-centralized nature of wind farm operations and maintenance data may lead to inefficiency in wind farm operation.

In one aspect according to the present invention, a system for monitoring and scheduling operations and maintenance (O&M) activities for a facility that includes a plurality of machines is provided. The system includes a user computer, a memory device for storing O&M data and resource availability data for the plurality of machines, and a processor coupled to the memory device. The processor is programmed to communicate with the user computer via an electronic data communication device. The processor is programmed to receive completed O&M activity data corresponding to at least one completed O&M activity via the user computer and to determine at least one recommended O&M activity based at least partially on the stored O&M data and the completed O&M activity data. The processor is also configured to analyze resource availability data and to schedule the recommended O&M activity based on resource availability data.

In another aspect, a method for monitoring and scheduling operations and maintenance (O&M) activities for a facility is provided. The facility includes a plurality of machines and a user computer and is communicatively coupled to a centralized database server. The method includes storing O&M data for the plurality of machines in the centralized database server, storing resource availability data in the centralized database server, and receiving completed O&M activity data at the centralized database server. The completed O&M activity data corresponds to at least one completed O&M activity. The method also includes determining at least one recommended O&M activity based at least partially on the stored O&M data and the completed O&M activity data and scheduling the recommended O&M activity based at least partially on the stored resource availability data.

In yet another aspect, a method for determining warranty compliance of a plurality of machines is provided. The plurality of machines are communicatively coupled to, and remotely located from, a centralized database server. The method includes receiving completed operations and maintenance (O&M) activity data at the centralized database server, the completed O&M activity data corresponding to at least one completed O&M activity. The method also includes receiving operation data corresponding to operation of the plurality of machines and storing warranty data corresponding to warranty compliance requirements for each of the plurality of machines. The method also includes determining warranty compliance based on at least one of the warranty data, the operation data, and the completed O&M activity data.

Various aspects and embodiments of the present invention will now be described in connection with the accompanying drawings, in which:
Figure 1 is a perspective view of an exemplary wind turbine.
Figure 2 is a partially cut-away perspective view of a portion of the wind turbine shown in Figure 1.
Figure 3 is a schematic view of an exemplary system for monitoring and scheduling operations and maintenance activities for a wind farm.
Figure 4 is a flow diagram of an exemplary method for monitoring and scheduling operations and maintenance activities for a wind farm.

As used herein, the term "blade" is intended to be representative of any device that provides reactive force when in motion relative to a surrounding fluid. As used herein, the term "wind turbine" is intended to be representative of any device that generates rotational energy from wind energy, and more specifically, converts kinetic energy of wind into mechanical energy. As used herein, the term "wind generator" is intended to be representative of any wind turbine that generates electrical power from rotational energy generated from wind energy, and more specifically, converts mechanical energy converted from kinetic energy of wind to electrical power. As used herein, the term "windmill" is intended to be representative of any wind turbine that uses rotational energy generated from wind energy, and more specifically mechanical energy converted from kinetic energy of wind, for a predetermined purpose other than generating electrical power, such as, but not limited to, pumping a fluid and/or grinding a substance.

Various technical effects of the systems and methods described herein include at least one of (a) storing resource availability data in a centralized database server; (b) receiving completed O&M activity data at the centralized database server, the completed O&M activity data corresponding to at least one completed O&M activity; (c) determining at least one recommended O&M activity based at least partially on the stored O&M data and the completed O&M activity data; and, (d) scheduling the recommended O&M activity based at least partially on the stored resource availability data.

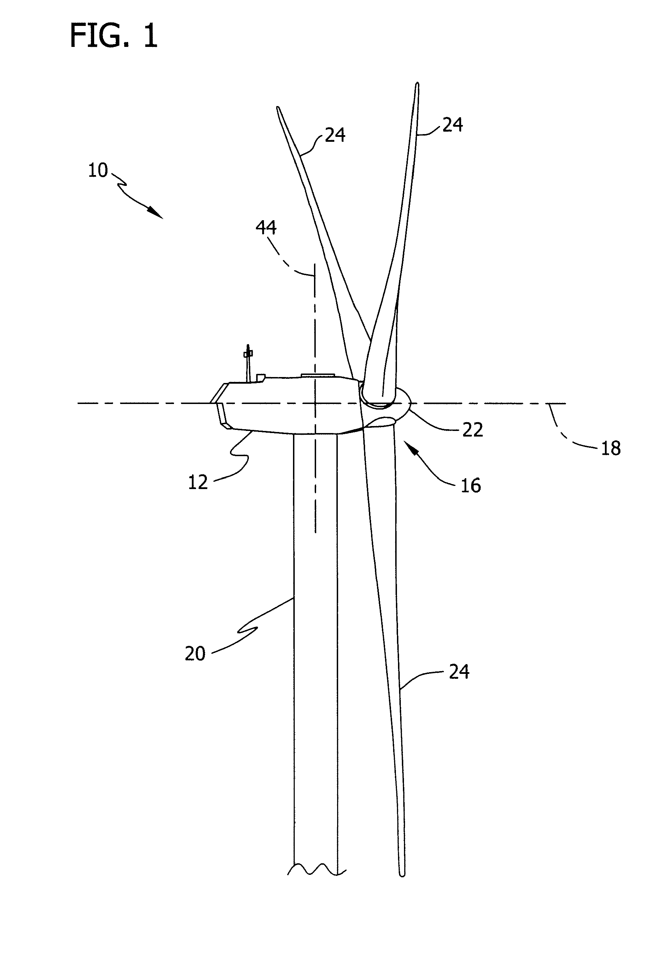

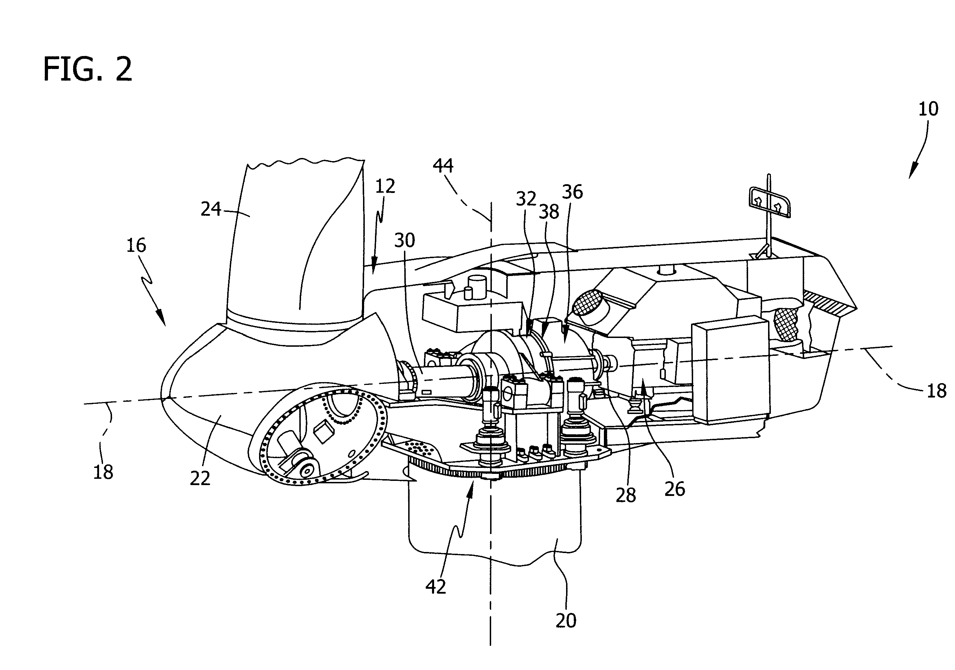

Figure 1 is a perspective view of an exemplary wind turbine 10. Figure 2 is a partially cut-away perspective view of a portion of wind turbine 10. Wind turbine 10 described and shown herein is a wind generator for generating electrical power from wind energy. However, in some embodiments, wind turbine 10 may be, in addition or alternative to a wind generator, any type of wind turbine, such as, but not limited to, a windmill (not shown). Moreover, wind turbine 10 described and shown herein includes a horizontal-axis configuration. However, in some embodiments, wind turbine 10 may include, in addition or alternative to the horizontal-axis configuration, a vertical-axis configuration (not shown). Wind turbine 10 may be coupled to an electrical load (not shown), such as, but not limited to, a power grid (not shown), for receiving electrical power therefrom to drive operation of wind turbine 10 and/or associated components and/or for supplying electrical power generated by wind turbine 10 thereto. Although only one wind turbine 10 is shown in Figures 1 and 2, in some embodiments, a plurality of wind turbines 10 may be grouped together to form a wind farm.

Wind turbine 10 includes a body 12, sometimes referred to as a "nacelle," and a rotor (generally designated by 16) coupled to body 12 for rotation with respect to body 12 about an axis of rotation 18. In the exemplary embodiment, body 12 is mounted on a tower 20. However, in some embodiments, in addition or alternative to tower-mounted nacelle 12, wind turbine 10 includes a nacelle 12 adjacent the ground and/or a surface of water. A height of tower 20 may be any suitable height enabling wind turbine 10 to function as described herein. Rotor 16 includes a hub 22 and a plurality of blades 24 (sometimes referred to as "airfoils") extending radially outwardly from hub 22 for converting wind energy into rotational energy. Although rotor 16 is described and shown herein as having three blades 24, rotor 16 may have any suitable number of blades 24. Blades 24 may each have any suitable length that allows wind turbine 10 to function as described herein. For example, in some embodiments, one or more of blades 24 are about one-half meter long, while in some embodiments one or more of blades 24 are about fifty meters long. Other examples of blade 24 lengths include ten meters or less, about twenty meters, about thirty-seven meters, and about forty meters. Still other examples include rotor blades between about fifty and about one hundred meters long.

Despite how rotor blades 24 are shown in Figure 1, rotor 16 may have blades 24 of any suitable shape, and may have blades 24 of any type and/or any configuration, whether such shape, type, and/or configuration is described and/or shown herein. One example of another type, shape, and/or configuration of blades 24 is a ducted rotor (not shown) having a turbine (not shown) contained within a duct (not shown). Another example of another type, shape, and/or configuration of blades 24 is included within a Darrieus wind turbine, sometimes referred to as an "eggbeater" turbine. Yet another example of another type, shape, and/or configuration of blades 24 is included within a Savonious wind turbine. Even another example of another type, shape, and/or configuration of blades 24 is included within a traditional windmill for pumping water, such as, but not limited to, four-bladed rotors having wooden shutters and/or fabric sails. Moreover, wind turbine 10 may, in some embodiments, be a wind turbine having rotor 16 that generally faces upwind to harness wind energy, and/or may be a wind turbine having rotor 16 that generally faces downwind to harness energy. Of course, in any embodiment, rotor 16 may not face exactly upwind and/or downwind, but may face generally at any angle (which may be variable) with respect to a direction of the wind to harness energy therefrom.

Referring now to Figure 2, wind turbine 10 includes an electrical generator 26 coupled to rotor 16 for generating electrical power from the rotational energy generated by rotor 16. Generator 26 may be any suitable type of electrical generator, such as, but not limited to, a wound rotor induction generator. Generator 26 includes a stator (not shown) and a rotor (not shown). Rotor 16 includes a rotor shaft 30 coupled to hub 22 for rotation therewith. Generator 26 is coupled to rotor shaft 30 such that rotation of rotor shaft 30 drives rotation of the generator rotor, and therefore operation of generator 26. In the exemplary embodiment, the generator rotor has a rotor shaft 28 coupled thereto and coupled to rotor shaft 30 such that rotation of rotor shaft 30 drives rotation of the generator rotor. In other embodiments, the generator rotor is directly coupled to rotor shaft 30, sometimes referred to as a "direct-drive wind turbine." In the exemplary embodiment, rotor shaft 28 is coupled to rotor shaft 30 through a gearbox 32, although in other embodiments rotor shaft 28 is coupled directly to rotor shaft 30.

The torque of rotor 16 drives the generator rotor to thereby generate variable frequency AC electrical power from rotation of rotor 16. Generator 26 has an air gap torque between the generator rotor and stator that opposes the torque of rotor 16. A frequency converter 36 is coupled to generator 26 for converting the variable frequency AC to a fixed frequency AC for delivery to an electrical load (not shown), such as, but not limited to a power grid (not shown), coupled to generator 26. Frequency converter 36 may be located anywhere within or remote to wind turbine 10. For example, in the exemplary embodiment frequency converter 36 is located within a base (not shown) of tower 20.

In some embodiments, wind turbine 10 may include a rotor speed limiter, for example, but not limited to a disk brake 38. Disk brake 38 brakes rotation of rotor 16 to, for example, slow rotation of rotor 16, brake rotor 16 against full wind torque, and/or reduce the generation of electrical power from electrical generator 26. Furthermore, in some embodiments, wind turbine 10 may include a yaw system 42 for rotating body 12 about an axis of rotation 44 for changing a yaw of rotor 16, and more specifically for changing a direction faced by rotor 16 to, for example, adjust an angle between the direction faced by rotor 16 and a direction of wind.

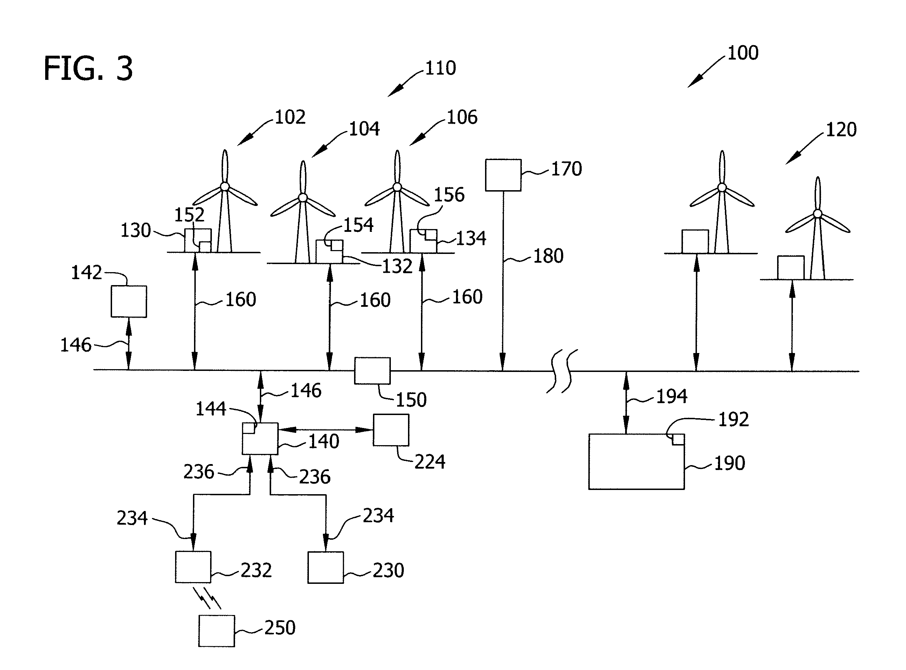

Figure 3 is a schematic view of an exemplary system 100 for monitoring and scheduling of operations and maintenance (O&M) activities for a facility, for example, a wind farm. In the exemplary embodiment, system 100 is configured to monitor operation and maintenance of one or more machines. In the exemplary embodiment, the machines are wind turbines 102, 104, and 106. Although described herein in the context of a wind farm, system 100 may be included within other facilities, for example, without limitation, a power plant that includes hydroelectric turbines, a power plant that includes steam turbines, and/or a solar power plant. In the exemplary embodiment, system 100 is also configured to schedule O&M activities for each wind turbine 102, 104, and 106. For example, O&M activities may include inspecting a component or system within wind turbine 102, manually collecting data from wind turbine 102 (e.g., visually inspecting and recording a meter reading), and/or performing a maintenance activity (e.g., replacing a bearing, lubricating a component). Moreover, system 100 is also configured to generate an O&M activity packet for each scheduled O&M activity. An O&M activity packet may include, without limitation, a description of the O&M activity, a list of materials needed to complete the O&M activity, a description of safety recommendations associated with the O&M activity (e.g., a lockout/tagout procedure), and/or other miscellaneous information related to the O&M activity.

In the exemplary embodiment, wind turbines 102, 104, and 106 are included within a wind farm 110. System 100 may be configured to monitor wind turbines located in separate, remotely located wind farms, for example wind farm 110 and a wind farm 120. In the exemplary embodiment, wind turbines 102, 104, and 106 are each coupled to an independent monitoring device, for example, monitoring devices 130, 132, and 134. Monitoring devices 130, 132, and 134 measure one or more operational parameters associated with one or more portions or components of each respective wind turbine 102, 104, and 106. Although shown as one monitoring device associated with each wind turbine, each monitoring device 130, 132, and 134 may monitor a plurality of wind turbines. Furthermore, each wind turbine 102, 104, and 106 may include multiple monitoring devices to measure operational parameters.

In the exemplary embodiment, system 100 also includes a centralized server 140 and at least one local monitoring station 142. In the exemplary embodiment, centralized server 140 is a Supervisory Control and Data Acquisition system 140, hereinafter referred to as SCADA system 140. In the exemplary embodiment, SCADA system 140 includes at least one computer 144 that includes a processing device and a memory. Computer 144 is configured to receive and process operational data signals 146, which are described further below.

In the exemplary embodiment, monitoring devices 130, 132, and 134 are coupled to an electronic data communication device 150. In the exemplary embodiment, electronic data communication device 150 includes an Ethernet hub and/or a signal conditioner configured within an Ethernet network. Alternatively, electronic data communication device 150 may include a wireless communication device, a broadband over power line device, or any other suitable communication device that enables communication of data from and to monitoring devices 130, 132, and 134.

In the exemplary embodiment, each monitoring device 130, 132, and 134 includes an input device, for example, input devices 152, 154, and 156. In the exemplary embodiment, input devices 152, 154, and 156 include a port, for example, an Ethernet port that facilitates coupling a laptop computer to monitoring devices 130, 132, and 134. For example, a technician may connect a suitable device, such as a laptop computer, to monitoring device 130 in order to receive information from, and to provide information to, system 100. In the exemplary embodiment, the technician connects the laptop computer to input device 152, which allows the technician to view an O&M activity packet on location at wind turbine 102, and also allows the technician to enter O&M data, including an indication of a completed O&M activity, to system 100. Alternatively, input devices 152, 154, and 156 may facilitate receiving information from, and providing information to, system 100 without the use of a separate device (e.g., the laptop computer).

Monitoring devices 130, 132, and 134 generate and transmit a plurality of data signals 160, which may include measurement data and/or data input by the technician. Each signal 160 is associated with a portion or component and a parameter of wind turbines 102, 104, and 106. Measurement data signals 160 include, without limitation, data associated with operation of wind turbines 102, 104, and 106, and technician entered data. More specifically, measurement data signals 160 may include data associated with a completed O&M activity, an oil pressure level, a total run-time, a brake application, rotational speeds of at least one electric power generator rotor shaft 30 (shown in Figure 2), and/or a plurality of generated electric power voltages and currents associated with wind farm 110.

System 100 is also configured to monitor a plurality of meteorological conditions that are substantially representative of the geographic region that includes wind farm 110. System 100 includes at least one meteorological data collection assembly 170. In the exemplary embodiment, meteorological data collection assembly 170 is a meteorological mast positioned within wind farm 110 that includes a plurality of meteorological measurement devices (not shown in Figure 3) that measure a plurality of meteorological conditions that may include, without limitation, substantially instantaneous wind speed and direction, ambient air pressure, and/or ambient air temperature. These meteorological measurement devices generate and transmit a plurality of measurement data signals 180. Each signal 180 is associated with one or more meteorological measurements of wind farm 110. Alternatively, assembly 170 includes any suitable device configured to facilitate performance of system 100 as described herein. Assembly 170 is coupled in electronic data communication with communication device 150. Meteorological conditions are measured and associated signals are transmitted to communication device 150 because meteorological conditions may have an effect on the operations and maintenance of, for example, wind turbine 102. For example, when a wind turbine operates in cold weather, more frequent maintenance may be recommended for rotor blade deicing systems. Furthermore, when a wind turbine operates in hot weather, more frequent maintenance may be recommended for turbine generator coolant systems.

In the exemplary embodiment, system 100 is further configured to monitor at least one electric power transmission and distribution substation 190 that is electrically coupled to wind farm 110. System 100 further includes an input/monitoring device 192. In an exemplary embodiment, input/monitoring device 192 includes a port that facilitates coupling a laptop computer to input/monitoring device 192. For example, a technician may connect a suitable device, such as a laptop computer, to input/monitoring device 192 in order to receive information from, and to provide information to, system 100. Input/monitoring device 192 may also measure operational parameters associated with substation 190. Input/monitoring device 192 then generates and transmits a plurality of measurement data signals 194 to, for example, SCADA system 140 via communication device 150. Each signal 194 is associated with a portion or component, and/or a parameter, of substation 190. Measurement data signals 194 represent, without limitation, a status of electric power circuit breakers (not shown in Figure 3) and/or a plurality of generated electric power voltages and currents associated with wind farm 110 and an electric power grid to which substation 190 is electrically coupled.

Measurement data signals 160, 180, and 194 that are transmitted into communication device 150 as described above are typically collectively referred to as operational data signals 146. Moreover, the data contained within such operational data signals 146 is referred to as operational data. Alternative embodiments may include additional electronic data sources. In the exemplary embodiment, operational data is recorded and transmitted substantially continuously. Alternatively, operational data may be recorded and transmitted with any suitable periodicity that facilitates operational performance of system 100 as described herein.

Communication device 150 is configured to receive operational data signals 146 as described above and is also configured to route and transmit such operational data signals 146 to a plurality of destinations that include, but are not limited to, SCADA system 140 and local monitoring station 142. In the exemplary embodiment, SCADA system 140 includes computer 144 that includes a processing device and a memory. Computer 144 is configured to receive and process operational data signals 146.

As used herein, the term computer is not limited to just integrated circuits referred to in the art as a computer, but broadly refers to a processor, a server, a microcontroller, a microcomputer, a programmable logic controller (PLC), an application specific integrated circuit, and other programmable circuits, and these terms are used interchangeably herein. In the exemplary embodiment, memory may include, but is not limited to, a computer-readable medium, such as a random access memory (RAM) (neither shown in Figure 3). Alternatively, a floppy disk, a compact disc - read only memory (CD-ROM), a magneto-optical disk (MOD), and/or a digital versatile disc (DVD) may also be used. Also, in the exemplary embodiment, additional input channels (not shown in Figure 3) may include, but are not limited to including, computer peripherals associated with an operator interface such as a mouse and a keyboard (neither shown in Figure 3). Alternatively, other computer peripherals may also be used that may include, for example, a scanner (not shown in Figure 3). Furthermore, in the exemplary embodiment, additional output channels may include, without limitation, an operator interface monitor and/or a printer (neither shown in Figure 3).

Processors included within system 100, including those within SCADA system 140, process information, including the operational data from device 150. RAM and storage devices store and transfer information and instructions to be executed by the processor. RAM and storage devices can also be used to store and provide temporary variables, static (i.e., non-changing) information and instructions, or other intermediate information to the processors during execution of instructions by the processors. Instructions that are executed include, but are not limited to, operations and maintenance scheduling algorithms. The execution of sequences of instructions is not limited to any specific combination of hardware circuitry and software instructions.

SCADA system 140 and local monitoring station 142 are coupled in electronic data communication with communication device 150 that is configured to transmit operational data signals 146 substantially continuously to SCADA system 140 and local monitoring station 142. Communication device 150 transmits operational data signals 146 to SCADA system 140 via at least one SCADA input channel.

In the exemplary embodiment, SCADA system 140 includes at least one database server 224. At least one database schema (not shown in Figure 3) is electronically generated and stored within database server 224 within SCADA system 140 and the database is configured to generate and store a plurality of database records (not shown in Figure 3). In the exemplary embodiment, O&M data is stored in database server 224. O&M data may include, for example, without limitation, unit specific maintenance plans, records of completed O&M activities, technician contact information, and/or safety information. Through the use of centralized storage of O&M data, system 100 facilitates updating the O&M data. For example, typically, a manufacturer provides a maintenance plan to a purchaser of a wind turbine, who is then responsible for performing the maintenance. Over time, the maintenance plan and/or safety information may change as replacement parts are included within the wind turbine, or as usage of the wind turbine changes. The centralized storage facilitates applying, for example, up-to-date maintenance and safety information to wind farm operation.

Additionally, the use of centralized storage of O&M data facilitates tracking of warranty information. For example, warranty coverage may be tied to proper performance of recommended O&M activities and/or to defined operation of the wind turbine. Typically, an operator of a wind farm performs O&M activities. Upon the occurrence of a technical problem or malfunction, the operator may request a replacement part or repair assistance from the manufacturer. Centralized storage of O&M data, in combination with the operational data, facilitates determining if the technical problem or malfunction is covered by the warranty, or if warranty coverage is precluded due to stored operational data (e.g., a total run-time exceeded a maximum covered run-time) and/or due to improper maintenance or a lack of maintenance.

In an exemplary embodiment, the O&M data stored in database server 224 may include a plurality of unit specific maintenance plans. More specifically, a specific maintenance plan is stored in database server 224 for each unit, device, and/or component monitored by monitoring devices 130, 132, and 134. Alternatively, a specific maintenance plan is stored in database server 224 for each unit, device, and/or component within wind farm 110 that is expected to require maintenance or replacement. The maintenance plan may include recommended O&M activities for the unit as well as recommended times when the O&M activities should be performed. For example, database server 224 may store a maintenance plan created specifically for a generator (i.e., Generator A) installed within wind turbine 102. The maintenance plan may recommend a fluid be replaced in Generator A by a technician once every six months. In the exemplary embodiment, the O&M data further includes a description of how to complete the O&M activity, a list of materials that will be needed to complete the O&M activity, an estimated length of time to complete the O&M activity, as well as a list of procedures promulgated to facilitate safe completion of the O&M activity (e.g., a lockout/tagout, LOTO, procedure). As described above, system 100 may be configured to assemble an O&M activity packet from the O&M data.

In another example, it may be recommended that fluid be replaced in Generator B (i.e., installed within wind turbine 104) once every three months. System 100 facilitates preventing over-maintenance (e.g., replacing the fluid in both Generator A and B every three months) or under-maintenance (e.g., replacing the fluid in both Generators A and B every six months).

In another example, the maintenance plan for Generator A may recommend the rotor be replaced every ten years or after forty-thousand hours of use, which ever occurs first. Because run-time is monitored by, for example, monitoring device 130, and stored in database server 224, system 100 facilitates recommending when to replace the rotor of Generator A. Furthermore, since inventory is monitored and stored in database server 224, system 100 facilitates replacing the rotor of Generator A when recommended by ensuring a replacement rotor is available when the replacement is scheduled to occur and by ensuring a technician is available to perform the replacement job.

In the exemplary embodiment, SCADA system 140 is also configured to determine inventory status. A wind turbine specific inventory chart is stored in database server 224. For example, an inventory chart, including serial numbers, is stored in database server 224. The inventory chart includes a list of replacement parts for all units, devices, and/or components included within each wind turbine, as well as a description of the location of the replacement parts. The inventory chart enables system 100 to determine if the materials needed to complete an O&M activity are available. SCADA system 140 may further be configured to order materials needed to complete an O&M activity and schedule the O&M activity in accordance with an expected delivery date of the material. Monitoring the inventory facilitates reducing a number of scheduled O&M activities that cannot be completed due to unavailable parts.

SCADA system 140 receives operational data signals 146 and uses a plurality of resident algorithms to manipulate at least a portion of the data received. For example, a plurality of averaging algorithms are configured to generate a plurality of database records of at least some of the measurements discussed above. At least some of such records include an approximate ten-minute average of the associated measurement. For example, at least some of the records of meteorological measurements received from assembly 170 via communication device 150 include, but are not limited to, ten-minute averages of wind speed and direction. Also, for example, at least some of the records of individual wind turbines 102, 104, and 106 in wind farm 110 received via device 150 include, but are not limited to, ten-minute averages of generator electric power output, nacelle wind speed and direction, and operational status information. In the exemplary embodiment, a SCADA database schema is configured such that the database records associated with operational data are stored on a per-wind turbine 102, 104, and 106 and a per-assembly 170 basis. Alternatively, the SCADA database schema may be configured in any suitable manner that facilitates operation of SCADA system 140 as defined herein.

In the exemplary embodiment, SCADA system 140 determines a prospective total of O&M activities planned over a specific time period. For example, SCADA system 140 may determine that over an upcoming six month period, it will cost $10,000 to perform all recommended O&M activities. Furthermore, SCADA system 140 may determine that over the upcoming six month period, 1,000 hours will be spent on O&M activities. An owner or operator of O&M monitoring and scheduling system 100 may use data corresponding to the total O&M activities for scheduling and budgeting purposes.

In the exemplary embodiment, SCADA system 140 is coupled in two-way electronic data communication with at least one remote monitoring and diagnostics (RM & D) work station 230 and at least one remote user work station 232. Alternatively, any number of work stations may be coupled to SCADA system 140. Data signals 234 from SCADA system 140 may be displayed on work stations 230 and 232 while operational command signals 236 to SCADA system 140 may be transmitted from either work station 230 or work station 232. In the exemplary embodiment, system 100 also includes a notification device 250. Notification device 250 may be communicatively coupled to SCADA system 140 and/or remote user work station 232. Notification device 250 is associated with a specific technician and is configured to receive an O&M activity alert signal and to transform the O&M activity alert signal into at least one of a visual indicator and an aural indicator. In the exemplary embodiment, notification device 250 is a cellular phone. For example, remote user work station 232 may transmit an O&M activity alert to a cellular phone of a technician as a reminder of the scheduled O&M activity. As described above, technician contact information data is stored in database server 224, and the technicians are associated with the O&M activities they are qualified to perform. In alternative embodiments, notification device 250 may be a pager, a home computer, a personal digital assistant (PDA), or any other suitable device that allows system 100 to function as described herein. Furthermore, system 100 is configured to facilitate remote access via the Internet. Such access includes security features known in the art.

Coupling, for example, SCADA system 140, meteorological data collection assembly 170, and input device 152 in electronic data communication facilitates flexibility with respect to physically positioning SCADA system 140, assembly 170, and input device 152. For example, SCADA system 140, assembly 170, and input device 152 may be positioned in separate geographical locations. In contrast, SCADA system 140, assembly 170, and input device 152 may be functionally configured within a single computer (not shown).

In the exemplary embodiment, SCADA system 140 receives O&M data from database server 224, completed O&M activity data from a technician via input device 152, operational data from monitoring devices 130, 132, and 134, and meteorological condition data from meteorological data collection assembly 170. SCADA system 140 determines recommended O&M activities, schedules the recommended O&M activities, and assembles an O&M activity packet for use by the technician. System 100 allows an O&M technician to access all of the information necessary to perform an O&M activity and facilitates accurate scheduling and monitoring of O&M activities.

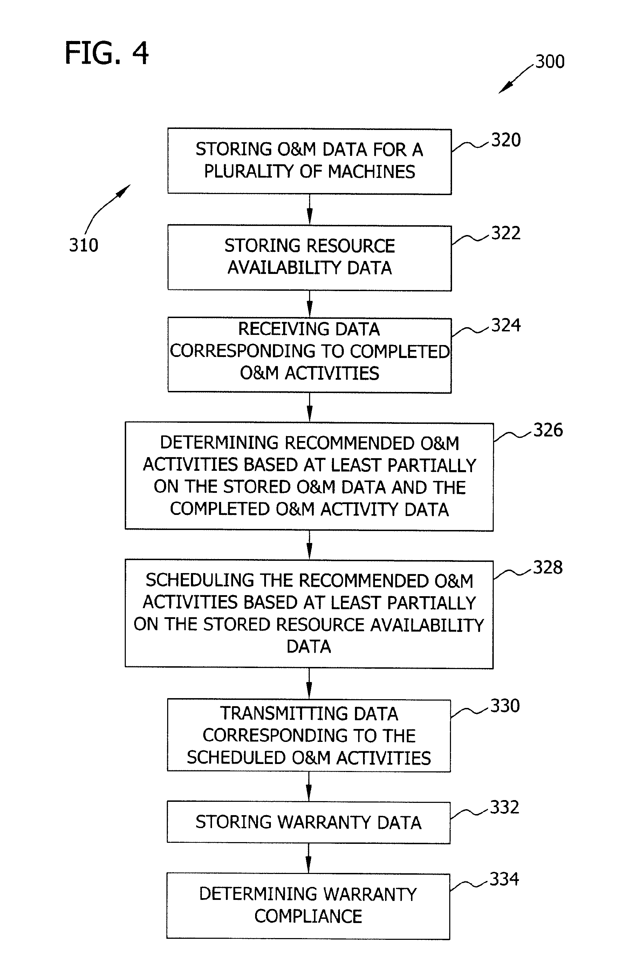

Figure 4 is a flow diagram 300 of an exemplary method 310 for monitoring and scheduling operations and maintenance (O&M) activities for a wind farm, for example, wind farm 110 (shown in Figure 3). As described above, O&M activities may include inspecting a wind turbine, for example, wind turbine 102 (shown in Figure 3), manually collecting data from wind turbine 102 (e.g., visually inspecting and recording a meter reading), and/or performing a maintenance activity (e.g., replacing a bearing, lubricating a component). Method 310 facilitates accurate scheduling and monitoring of O&M activities at a centralized location.

In the exemplary embodiment, method 310 includes storing 320 O&M data for a plurality of machines. For example, recommended maintenance data, technician contact information, and safety recommendations/requirements may be stored for wind turbines 102, 104, and 106 (shown in Figure 3). Furthermore, O&M data for components or sub-systems within wind turbines 102, 104, and 106 may also be stored. Method 310 also includes storing 322 resource availability data. For example, storing 322 resource availability data may include storing inventory data and/or data corresponding to schedules of technician availability. In the exemplary embodiment, the O&M data and the resource availability data for the plurality of machines is stored at a central location, for example, database server 224 (shown in Figure 3).

In the exemplary embodiment, method 310 also includes receiving 324 data corresponding to completed O&M activities. For example, once a technician completes an O&M activity, the method and systems described herein facilitate entering a completed task confirmation into, for example, system 100. The completed task confirmation is transmitted to a central location, for example, SCADA system 140. In some embodiments, the technician enters the completed task confirmation into a user computer, for example, input device 152 (shown in Figure 3), positioned at wind turbine 102.

Method 310 may also include determining 326 recommended O&M activities based at least partially on the stored O&M data and the completed O&M activity data. For example, SCADA system 140 accesses O&M data stored in database server 224 and receives completed O&M activity data from, for example, input device 152. Using the O&M data and the completed O&M activity data, SCADA system 140 determines upcoming recommended O&M activities. As described above, database server 224 may store a maintenance plan created specifically for a generator (i.e., Generator A) installed within wind turbine 102. The maintenance plan may recommend a fluid be replaced in Generator A by a technician once every six months. SCADA system 140 may determine that a fluid replacement activity was completed five months ago, and recommend the fluid be replaced within the next month.

SCADA system 140 may also receive data corresponding to wind farm operation. SCADA system 140 may then determine 326 recommended O&M activities based at least partially on the stored O&M data, the completed O&M activity data, and the data corresponding to wind farm operation. For example, it may be recommended by a manufacturer of Generator A that the rotor be replaced every ten years or after forty-thousand hours of use, which ever occurs first. Since operating data such as run-time is monitored by, for example, monitoring device 130, and stored in database server 224, SCADA system 140 is able to determine when to recommend replacement of the rotor.

In the exemplary embodiment, method 310 also includes scheduling 328 the recommended O&M activities based at least partially on the stored resource availability data. As described above, resource availability data may include inventory data and/or data corresponding to technician availability. The recommended O&M activity, machine operating schedule data, material availability data, and technician availability data may be analyzed by SCADA system 140 to determine a schedule for the recommended O&M activities. By monitoring inventory and technician availability, method 310 facilitates performing an O&M activity when recommended by ensuring necessary parts and materials are available when the activity is scheduled to occur and that a technician is available to perform the activity.

Method 310 may also include transmitting 330 data corresponding to the scheduled O&M activities. For example, an O&M activity notice may be transmitted to a predetermined notification device associated with a technician able to perform the recommended O&M activity. The O&M activity notice may serve as a request that the technician perform the O&M activity at a certain date and time. The O&M activity notice may also serve as a reminder to the technician of an upcoming O&M activity. The O&M activity notice may also include an O&M activity packet, which may include an O&M activity description, an O&M activity tooling list, and a safety description.

In the exemplary embodiment, method 310 also includes storing 332 warranty data corresponding to warranty compliance requirements and determining 334 warranty compliance. For example, warranty coverage may be tied to proper performance of recommended O&M activities. Typically, an operator of a wind farm performs O&M activities. Upon the occurrence of a technical problem or malfunction, the operator may request a replacement part or repair assistance from the manufacturer. Centralized storage of O&M data facilitates determining if the technical problem or malfunction is covered by the warranty.

Described herein are exemplary methods and systems for scheduling and monitoring overall operations of a wind farm. More specifically, the methods and systems described herein enable centralized storage of operations and maintenance (O&M) data, as well as access to the centralized storage. The methods and systems described herein facilitate efficiently executing O&M activities by monitoring operation of individual machines as well as meteorological conditions, and by using the information obtained, in combination with resource availability data, to schedule O&M activities. The methods and systems allow an O&M technician to access all of the information necessary to perform an O&M activity. The methods and systems also facilitate accurate scheduling and monitoring of O&M activities because O&M technicians directly input into the centralized server data corresponding to completed O&M activities, materials used, and replacement parts used. The methods and systems also facilitate efficient operation of the wind farm by monitoring replacement part and material inventories and comparing those inventories to materials and parts needed for upcoming O&M activities.

The methods and systems described herein facilitate efficient and economical operation of a wind farm. Exemplary embodiments of methods and systems are described and/or shown herein in detail. The methods and systems are not limited to the specific embodiments described herein, but rather, components of each system, as well as steps of the methods, may be utilized independently and separately from other components and steps described herein. Each component, and each method step, can also be used in combination with other components and/or method steps. Although described herein within the context of a wind farm, the methods and systems described herein may be applied to, for example, without limitation, power plants that include hydroelectric turbines or steam turbines, solar power plants, manufacturing facilities that include a plurality of individual machines, and/or any other facility where O&M activities are monitored.

When introducing elements/components/etc. of the methods and systems described and/or illustrated herein, the articles "a," "an," "the," and "said" are intended to mean that there are one or more of the element(s)/component(s)/etc. The terms "comprising," "including," and "having" are intended to be inclusive and mean that there may be additional element(s)/component(s)/etc. other than the listed element(s)/component(s)/etc.

This written description uses examples to disclose the invention, including the preferred mode, and also to enable any person skilled in the art to practice the invention, including making and using any devices or systems and performing any incorporated methods. the patentable scope of the invention is defined by the claims, and may include other examples that occur to those skilled in the art. such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system for monitoring and scheduling operations and maintenance (O&M) activities for a facility, said facility comprising a plurality of machines, said system comprising:
   a user computer;
   a memory device for storing O&M data and resource availability data for the plurality of machines; and,
   a processor coupled to said memory device, said processor configured to communicate with said user computer via an electronic data communication device, said processor programmed to:
      receive completed O&M activity data corresponding to at least one completed O&M activity via said user computer;
      determine at least one recommended O&M activity based at least partially on the stored O&M data and the completed O&M activity data;
      analyze resource availability data, the resource availability data comprising at least one of technician availability data and material availability data; and,
      schedule the recommended O&M activity based on resource availability data.
2. A system in accordance with clause 1, wherein said processor is further programmed to assemble an O&M activity packet for each scheduled O&M activity, the O&M activity packet comprising data corresponding to at least one of an O&M activity description, an O&M activity tooling list, and a safety description.
3. A system in accordance with any preceding clause, wherein said processor is further programmed to transmit the O&M activity packet to said user computer upon request.
4. A system in accordance with any preceding clause, further comprising a notification device communicatively coupled to said processor, said notification device configured to:
   receive at least one of an O&M activity alert signal and the O&M activity packet from said processor, wherein the O&M activity alert signal is at least partially based on the stored O&M data; and
   transform the O&M activity alert signal into at least one of a visual indicator and an aural indicator.
5. A system in accordance with any preceding clause, wherein said processor is further programmed to receive operation data corresponding to operation of at least one of the plurality of machines, said processor further programmed to determine the recommended O&M activity based at least partially on the operation data.
6. A system in accordance with any preceding clause, wherein said processor is further configured to:
   store warranty data in said memory device, wherein the warranty data comprises at least one O&M activity required to be performed to comply with warranty conditions; and,
   determine warranty compliance based on at least one of the stored warranty data, the completed O&M activity data, and operational data.
7. A system in accordance with any preceding clause, wherein the O&M data comprises at least one of recommended maintenance data, completed maintenance data, technician contact data, and safety procedure data.
8. A system in accordance with any preceding clause, wherein the resource availability data comprises at least one of technician availability schedules, machine operating schedules, and material inventories.
9. A system in accordance with any preceding clause, wherein said processor is further programmed to determine at least one of a cost estimate and a labor time estimate for an upcoming time period based at least partially on the scheduled O&M activity.
10. A method for monitoring and scheduling operations and maintenance (O&M) activities for a facility comprising a plurality of machines and at least one user computer, said facility communicatively coupled to a centralized database server, said method comprising:
   storing O&M data for the plurality of machines in the centralized database server;
   storing resource availability data in the centralized database server;
   receiving completed O&M activity data at the centralized database server, the completed O&M activity data corresponding to at least one completed O&M activity;
   determining at least one recommended O&M activity based at least partially on the stored O&M data and the completed O&M activity data; and,
   scheduling the recommended O&M activity based at least partially on the stored resource availability data.
11. A method in accordance with any preceding clause, further comprising transmitting data corresponding to the scheduled O&M activity to at least one of the user computer and a technician notification device.
12. A method in accordance with any preceding clause, wherein transmitting data comprises transmitting an O&M activity alert signal to the technician notification device, the technician notification device configured to transform the O&M activity alert signal to at least one of a visual indicator and an aural indicator.
13. A method in accordance with any preceding clause, further comprising receiving operation data corresponding to operation of at least one of the plurality of machines and determining the at least one recommended O&M activity based at least partially on the stored O&M data, the completed O&M activity data, and the operation data.
14. A method in accordance with any preceding clause, further comprising:
   storing warranty data corresponding to warranty compliance requirements; and,
   monitoring warranty compliance based on at least one of the warranty data, the operation data, and the completed O&M activity data.
15. A method in accordance with any preceding clause, wherein storing O&M data comprises storing at least one of recommended maintenance data, completed maintenance data, technician contact information, and safety procedure data.
16. A method in accordance with any preceding clause, wherein storing O&M data, storing resource availability data, and receiving completed O&M activity data at the centralized database server comprise storing O&M data, storing resource availability data, and receiving completed O&M activity data for a plurality of remotely located wind turbines at the centralized database server.
17. A method in accordance with any preceding clause, wherein receiving completed O&M activity data comprises receiving at the centralized database server a completed task confirmation from the user computer, the user computer located proximate to one of the plurality of remotely located wind turbines.
18. A method in accordance with any preceding clause, wherein storing resource availability data comprises storing inventory data, technician schedule data, and machine operating schedule data.
19. A method in accordance with any preceding clause, further comprising determining at least one of a cost estimate and a labor time estimate for an upcoming time period based at least partially on the scheduled recommended O&M activity.
20. A method for determining warranty compliance of a plurality of machines, the plurality of machines communicatively coupled to, and remotely located from, a centralized database server, said method comprising:
   receiving completed operations and maintenance (O&M) activity data at the centralized database server, the completed O&M activity data corresponding to at least one completed O&M activity;
   receiving operation data corresponding to operation of the plurality of machines;
   storing warranty data corresponding to warranty compliance requirements for each of the plurality of machines; and,
   determining warranty compliance based on at least one of the warranty data, the operation data, and the completed O&M activity data.

## Claims

1. A system for monitoring and scheduling operations and maintenance (O&M) activities for a facility, said facility comprising a plurality of machines, said system comprising:
a user computer (144);
a memory device for storing O&M data and resource availability data for the plurality of machines; and,
a processor coupled to said memory device, said processor configured to communicate with said user computer via an electronic data communication device (150), said processor programmed to:
receive completed O&M activity data corresponding to at least one completed O&M activity via said user computer;
determine at least one recommended O&M activity based at least partially on the stored O&M data and the completed O&M activity data;
analyze resource availability data, the resource availability data comprising at least one of technician availability data and material availability data; and,
schedule the recommended O&M activity based on resource availability data.

2. A system in accordance with claim 1, wherein said processor is further programmed to assemble an O&M activity packet for each scheduled O&M activity, the O&M activity packet comprising data corresponding to at least one of an O&M activity description, an O&M activity tooling list, and a safety description.

3. A system in accordance with any preceding claim, wherein said processor is further programmed to transmit the O&M activity packet to said user computer (144) upon request.

4. A system in accordance with any preceding claim, further comprising a notification device (250) communicatively coupled to said processor, said notification device configured to:
receive at least one of an O&M activity alert signal and the O&M activity packet from said processor, wherein the O&M activity alert signal is at least partially based on the stored O&M data; and
transform the O&M activity alert signal into at least one of a visual indicator and an aural indicator.

5. A system in accordance with any preceding claim, wherein said processor is further programmed to receive operation data corresponding to operation of at least one of the plurality of machines, said processor further programmed to determine the recommended O&M activity based at least partially on the operation data.

6. A system in accordance with any preceding claim, wherein said processor is further configured to:
store warranty data in said memory device, wherein the warranty data comprises at least one O&M activity required to be performed to comply with warranty conditions; and,
determine warranty compliance based on at least one of the stored warranty data, the completed O&M activity data, and operational data.

7. A system in accordance with any preceding claim, wherein the O&M data comprises at least one of recommended maintenance data, completed maintenance data, technician contact data, and safety procedure data.

8. A system in accordance with any preceding claim, wherein the resource availability data comprises at least one of technician availability schedules, machine operating schedules, and material inventories.

9. A system in accordance with any preceding claim, wherein said processor is further programmed to determine at least one of a cost estimate and a labor time estimate for an upcoming time period based at least partially on the scheduled O&M activity.

10. A method (310) for determining warranty compliance of a plurality of machines, the plurality of machines communicatively coupled to, and remotely located from, a centralized database server (224), said method comprising:
receiving completed operations and maintenance (O&M) activity data at the centralized database server, the completed O&M activity data corresponding to at least one completed O&M activity;
receiving operation data corresponding to operation of the plurality of machines;
storing warranty data corresponding to warranty compliance requirements for each of the plurality of machines; and,
determining warranty compliance based on at least one of the warranty data, the operation data, and the completed O&M activity data.
